# EUROPEAN PATENT APPLICATION

(11) **EP 3 054 053 A1**
(43) Date of publication of application: **10.08.2016**
(21) Application number: 14850662.9
(22) Date of filing: 29.09.2014
(51) Int. Cl.: E01C 13/08

(54) **ARTIFICIAL TURF MAT AND MANUFACTURING APPARATUS THEREFOR**

(30) Priority: 04.10.2013 KR 20130118310
(71) Applicant: Lee, Jung Min, Ulsan 680-080 (KR)
(72) Inventor: LEE, Sun Keon, Ulsan 680-080 (KR)
(74) Representative: Nederlandsch Octrooibureau
(86) International application number: PCT/KR2014/009126
(87) International publication number: WO 2015/050347

(57) **Abstract**

The present invention relates to an artificial turf mat and a manufacturing apparatus therefor. The artificial turf mat comprises: a plurality of pile yarns corresponding to artificial turf; a lining in which the plurality of pile yarns are turfed; a coating film formed by coating a coating agent on the bottom surface of the lining in which the pile yarns are exposed; and an outer fabric thermo-compressed onto the bottom surface of the lining in which the coating film is formed. The apparatus for manufacturing the artificial turf mat comprises: a pile yarn supply portion for supplying a plurality of pile yarns; a lining supply portion for supplying a lining; a weaving portion for turfing the pile yarns to the lining; and a coating portion for coating a coating agent on the bottom surface of the lining, and further comprises: an outer fabric supply portion for supplying an outer fabric; and an outer fabric compression portion for thermo-compressing the outer fabric onto the bottom surface of the lining. Therefore, the durability of the mat, due to the outer fabric, and the draining performance of the mat, due to a drain groove, can respectively be improved while lowering the production costs of the mat by reducing the consumption amount of the coating agent by coating the same on only a stitch portion of the pile yarns.

## Description

### [Technical Field]

The present disclosure relates to an artificial turf mat and a manufacturing apparatus therefor, and more particularly, to an artificial turf mat used as a basic unit of artificial turf installed (or provided) in the place of natural turf in stadiums or golf ranges, and an apparatus used for manufacturing the artificial turf mat.

### [Background Art]

Artificial turf generally refers to turf artificially manufactured from synthetic fibers, which is installed to replace natural grass in a site such as an indoor area or a shady spot in which natural grass is impossible to grow and develop.

Since artificial turf takes on a green color regardless of season, location, or a surrounding environment, it is advantageous to landscape and facilitates post management. However, artificial turf has its downside: lack of a sense of the season, inferior texture to natural grass, and permanent discoloration of green color with the passage of time.

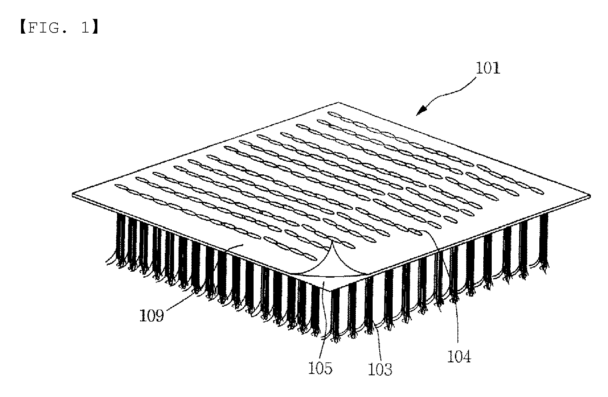

In artificial turf, an artificial turf mat, as denoted by reference numeral 101 in FIG. 1, woven by superposing an outer fabric 109 on a lining 105, both formed of a backing fabric, and tufting pile yarns 103 formed of nylon, or the like, in a row thereon is used as a basic unit.

However, as for the related art artificial turf mat 101, in order to prevent damage to the stitch 104 portions of the pile yarns 103 exposed to a bottom surface of the outer fabric 109 or prevent the pile yarns 103 from being separated from the outer fabric 109 due to tufting, a coating agent is applied to the bottom surface of the outer fabric 109 after tufting and allowed to pass through a heat drying furnace to form a coating film. However, since pull-out strength applied to the pile yarns 103 is completely supported by only the coating film, the coating film is required to be thick, and since the coating agent is applied to the entirety of the bottom surface of the outer fabric 109, a consumption amount of the coating agent is increased.

In addition, in the related art artificial turf mat 101, the coating agent applied to the bottom surface of the outer fabric 109 is cured by only heat drying, incurring cost to supply heat required for drying.

Moreover, after installation, the coating film of the related art artificial turf mat 101 in contact with the ground or a floor surface wears readily due to frictional contact, and thus, the pile yarns 103 may be easy to fall out, reducing durability.

Also, since the coating film is overlaid on the entire bottom surface of the outer fabric 109, moisture absorbed by the lining 105 may not be easily discharged outwards, degrading draining performance.

### [Disclosure]

### [Technical Problem]

The present disclosure has been made to solve the above-mentioned problems occurring in the related art artificial turf mat, an aspect of the present disclosure provides an artificial turf mat manufactured at low cost by reducing a consumption amount of a coating agent applied to stitch portions of pile yarns, while enhancing durability and draining performance.

### [Technical Solution]

According to an aspect of the present disclosure, an artificial turf mat may include: a plurality of pile yarns corresponding to artificial turf; a lining in which the plurality of pile yarns are turfed; a coating film formed by coating a coating agent on the bottom surface of the lining to which the pile yarns are exposed; and an outer fabric thermo-compressed to the bottom surface of the lining on which the coating film is formed, wherein the coating film is formed on each of the plurality of pile yarns exposed to the bottom surface of the lining in a tufting direction of the pile yarns.

The artificial turf mat may further include a plurality of drain grooves formed between a plurality of coating rows formed by the coating film in the tufting direction of the plurality of pile yarns.

According to another aspect of the present disclosure, an apparatus for manufacturing an artificial turf mat may include: a pile yarn supply portion supplying a plurality of pile yarns corresponding to artificial turf; a lining supply portion supplying a lining in which the plurality of pile yarns are to be tufted; a weaving portion turfing the plurality of pile yarns supplied from the pile yarn supply portion to the lining supplied from the lining supply portion; and a coating portion coating a coating agent on a bottom surface of the lining to which the plurality of pile yarns tufted by the weaving portion are exposed, and further includes: an outer fabric supply portion supplying an outer fabric to be adhered to the bottom surface of the lining; and an outer fabric compression portion thermo-compressing the outer fabric supplied from the outer fabric supply portion to the bottom surface of the lining on which the coating agent has been coated by the coating portion.

The coating portion may apply the coating agent to each of the plurality of pile yarns exposed to the bottom surface of the lining in a spray manner in a tufting direction of the plurality of pile yarns.

### [Advantageous Effects]

In the artificial turf mat and the manufacturing apparatus thereof according to exemplary embodiments of the present disclosure, since the stitch portions, of the pile yarns tufted to the lining, exposed to the bottom surface of the lining adhered to the outer fabric, as well as to the coating film, pull-out strength of the pile yarns may be increased to enhance durability of the artificial turf mat, and since a large amount of coating agent is not required to be used to increase pull-out strength of the pile yarns, manufacturing cost of the artificial turf mat may be reduced as much.

Also, since the coating agent is sprayed only to the stitch portions of the pile yarns, a usage amount of the coating agent may be reduced, compared with a case in which the coating agent is applied to the entirety of the bottom surface of the lining, reducing manufacturing cost of the artificial turf mat.

In addition, since the stitch portions of the pile yarns are arranged to be thin and extend in the tufting direction of the pile yarns and the coating film formed thereon are thermo-compressed between the lining and the outer fabric, a heating value required for adhering the lining and the outer fabric may be reduced, reducing manufacturing cost of the artificial turf mat.

In addition, since the drain grooves are formed between the mutually adjacent coating films arranged in a row and extending in the tufting direction of the pile yarns, moisture absorbed into the lining may be smoothly discharged outwardly from the mat, enhancing draining performance of the mat.

### [Description of Drawings]

FIG. 1 is a perspective view illustrating a related art artificial turf mat.
FIG. 2 is a perspective view illustrating an artificial turf mat according to an exemplary embodiment in the present disclosure.
FIG. 3 is a front view schematically illustrating an apparatus for manufacturing an artificial turf mat according to an exemplary embodiment in the present disclosure.
FIG. 4 is a plan view of the apparatus for manufacturing an artificial turf mat of FIG. 3.

### [Best Modes]

Hereinafter, an artificial turf mat according to exemplary embodiments of the present disclosure will be described in detail with reference to the accompanying drawings.

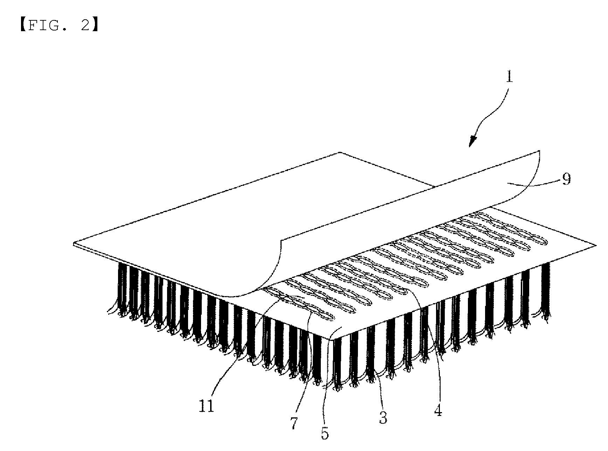

An artificial turf mat, denoted by reference numeral 2 in FIG. 2, according to an exemplary embodiment includes a plurality of pile yarns 3, a lining 5, a coating film 7, and an outer fabric 9.

Here, the plurality of pile yarns 3 are yarns corresponding to artificial turf of the artificial turf mat 1. As illustrated in FIG. 2, the pile yarns 3 are tufted and erected on the lining 5 to serve as turf of the mat 1. Here, the pile yarns 3 may be formed of a material such as polyvinylidene chloride, polyethylene, polypropylene, or nylon, and may be formed as a plurality of yarns formed by cutting pile yarns supplied from a separate pile yarn supply roll (not shown) to a pile yarn supply unit 53 into single-unit pieces or a strand of yarn woven in a loop form. Also, as the pile yarns 3, a plurality of yarns cut into pieces are applied. The pile yarns 3 form a line in a tufting direction as one strand forms one stitch 4, and the lines are arranged to be spaced apart from one another horizontally by a predetermined interval.

The lining 5 is cloth used on the bottom of the pile yarns 3, allowing the plurality of pile yarns 3 to be tufted thereon at predetermined intervals. Like that of a general artificial turf mat, a backing fabric is preferably used as the lining 5. However, unlike the related art artificial turf mat, the lining 5 is formed as a single piece of cloth, because a coating agent coated on the bottom surface of the lining 5is applied only to the stitch portions 4 of the pile yarns 3, that is, portions exposed to the bottom surface of the lining 5 due to tufting, eliminating the necessity of a separate coating agent absorption layer facilitating adsorption of a coating agent.

The coating film 7, a means for coating the stitch 4 portions of the pile yarns 3 tufted on the lining 5, is formed by applying a coating agent such as latex or a polyurethane liquid to the bottom surface of the lining 5 on which the pile yarns 3 are tufted apiece and exposed, increasing durability and waterproof performance of the pile yarns 3. In particular, the coating film 7 is formed by applying a coating agent to the bottom surface of the lining 5 as mentioned above, and here, since the coating agent is sprayed only to the stitch 4 portions of the pile yarns 3 which are tufted to the lining 5 and exposed to the bottom surface of the lining 5 as illustrated in FIG. 2, the coating film 7 is formed to extend in the tufting direction of the pile yarns 3. Thus, as illustrated, a plurality of drain grooves 11 are formed along the coating rows formed in the tufting direction of the pile yarns 3 between a coating film 7 and a neighboring coating film 7.

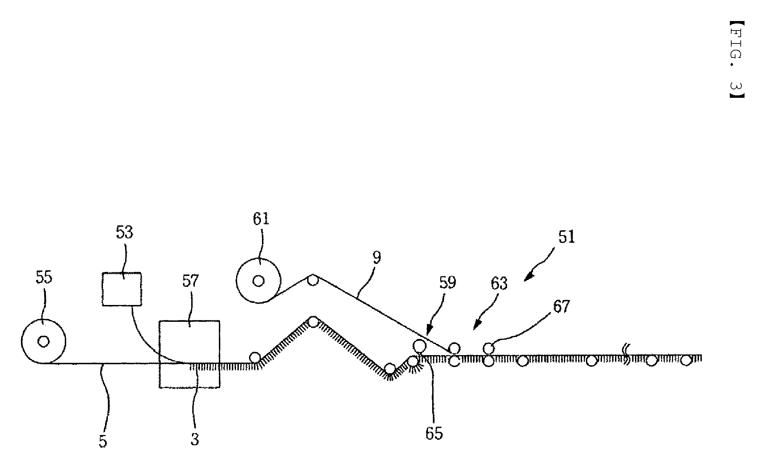

The outer fabric 9 is a means for protecting the pile yarns exposed to the bottom surface of the lining 5 due to tufting, that is, the stitch 4 portions. As illustrating FIG. 2, the outer fabric 9 is adhered to the bottom surface of the lining 5 on which the coating film 7 is formed. Here, preferably, the outer fabric 9 is formed of a backing fabric, and as illustrated in FIG. 3, the outer fabric 9 may be thermo-compressed to the bottom surface of the lining 5 by a thermo-compressing roller 67.

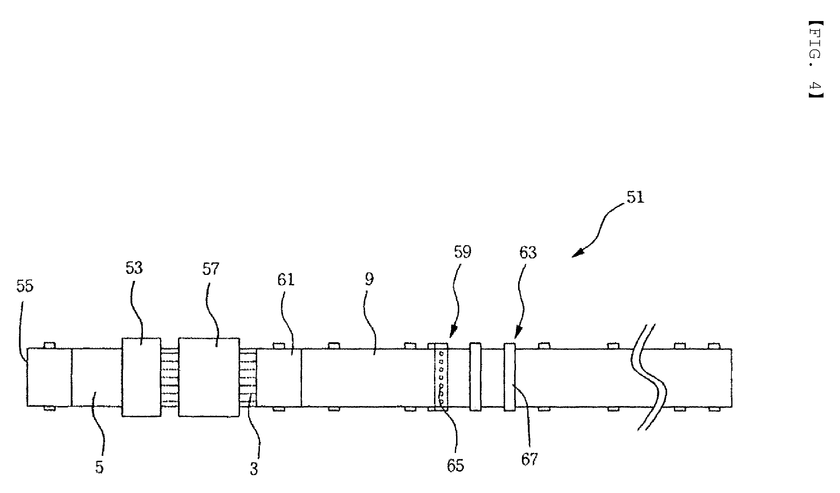

As illustrated in FIGS. 3 and 4, an artificial turf mat manufacturing apparatus 51 according to an exemplary embodiment in the present disclosure for manufacturing the aforementioned artificial turf mat 1 includes a pile yarn supply portion 53, a lining supply portion 55, a weaving portion, and a coating portion 59, and further includes an outer fabric supply portion 61 and an outer fabric compression portion 63.

Here, as illustrated in FIGS. 3 and 4, the pile yarn supply portion 53, which supplies a plurality of pile yarns 3 corresponding to artificial turf of the artificial turf mat 1, is disposed between the lining supply portion 55 and the weaving portion 57 to supply the pile yarns 3 to the weaving portion 57. Here, in a case in which a plurality of yarns cut to single-unit pieces are used as in this embodiment, the pile yarn supply portion 53 cuts pile yarns supplied from a separate pile yarn supply roll to an appropriate length, and supplies the same to the weaving portion 57.

As illustrated in FIGS. 3 and 4, the lining supply portion 55, which supplies fabric used as the lining 5 as described above, is disposed on the uppermost stream side of a movement path of the lining 5 and formed of a fabric roll with fabric of the lining 5 such as backing fabric wound therearound. Thus, the lining supply portion 55 continuously supplies the lining 5 to the weaving portion 57 so that the plurality of pile yarns 3 are tufted.

As illustrated in FIGS. 3 and 4, the weaving portion 57, which weaves the plurality of pile yarns 3 into the lining 5, is disposed on the downstream side, compared with the pile yarn supply portion 53 and the lining supply portion 55, and tufts the plurality of pile yarns 3 supplied from the pile yarn supply portion 53 to the lining 5 supplied from the lining supply portion 55.

As illustrated in FIGS. 3 and 4, the coating portion 59, which coats a coating agent on the completely weaved lining 5, is disposed on the downstream side of the weaving portion 57 and applies a coating agent to the bottom surface of the pile yarns 3-tufted lining 5. Here, as illustrated in FIGS. 3 and 4, in particular, the coating portion 59 sprays the coating agent to only the stitch 4 portions of the pile yarns 3 exposed to the bottom surface of the lining 5 by a plurality of coating nozzles 65 arranged in a traverse direction traversing the lining 5, forming the coating film 7 extend in a tufting direction of the pile yarns 3.

As illustrated in FIGS. 3 and 4, the outer fabric supply portion 61, which supplies the outer fabric 9 adhered to the bottom surface of the lining 5, is formed of a fabric roll with outer fabric 9 such as backing fabric wound therearound and disposed on the upstream side of the outer fabric compression portion 63. Thus, the outer fabric supply portion 61 continuously supplies the outer fabric 9 to the outer fabric compression portion 63.

As illustrated in FIGS. 3 and 4, the outer fabric compression portion 63, which adheres the outer fabric 9 to the bottom surface of the lining 5, is disposed on the downmost stream side of the artificial turf mat manufacturing apparatus 5 and thermo-compresses the outer fabric 9 supplied from the outer fabric supply portion 61 to the bottom surface of the lining 5 on which the coating of the coating agent by the coating portion 59 has been finished.

To this end, as illustrated, the outer fabric compression portion 63 includes one or more thermo-compression rollers, preferably, two thermo-compression rollers 67, disposed to be spaced apart from one another in a transfer direction of the lining 5 and the outer fabric 9. Here, thermo-compression rollers 67 formed as pairs up and down may be arranged in a traverse direction traversing the lining 5 and the outer fabric 9 and heat, and simultaneously, compress the lining 5, the outer fabric 9, and the coating film 7, the pile yarns 3, and the stitch 5 portions therebetween to adhere the same.

Hereinafter, operations of the artificial turf mat 1 and the artificial turf mat manufacturing apparatus 51 according to exemplary embodiments in the present disclosure will be described.

As illustrated in FIG. 2, in the artificial turf mat 1, the plurality of pile yarns 3 tufted to the lining 5 such as a backing fabric are artificial turf, and the stitch 4 portions of the pile yarns 3 exposed to the bottom surfaces of the lining 5 are continuously formed in a row in the tufting direction. Also, the coating film 7 formed by spreading a coating agent to only the stitch 4 portions extends in the tufting direction, on which the outer fabric 9 formed of a backing fabric is thermo-compressed to more firmly protect the pile yarns 3, that is, the stitch 4 portions of the pile yarns 3.

Also, the drain groove 11 is formed between the coating film 7 formed along the stitch 4 portions of the pile yarns 3 on the bottom surface of the lining 5 and a neighboring coating film 7, and here, the drain groove 11 also extends in the tufting direction of the pile yarns 3 to readily discharge outwardly water which has been absorbed into the mat 1 through the lining 5.

As illustrated in FIGS. 3 and 4, the artificial turf mat manufacturing apparatus 51 for manufacturing the artificial turf mat 1 manufactures the artificial turf mat 1 through an array of process flows. The lining 5 as a base is first supplied from the lining supply portion 55 to the weaving portion 57, and the pile yarns 3 corresponding to turf are also supplied from the pile yarn supply portion 53 to the weaving portion 57.

Upon receiving the pile yarns 3 and the lining 5, the weaving portion 57 weaves the pile yarns 3 into the lining 5 in a row through tufting.

The lining 5, into which the pile yarns 3 has been completely woven, continues to be transferred toward the downstream side. When the lining 5 reaches the coating portion 59, the bottom surface of the lining 5 is coated with a coating agent sprayed from the plurality of coating nozzles 65. Here, as discussed above, only the stitch 4 portions of the pile yarns 3 exposed to the bottom surface of the lining 5 are coated with the coating agent to form the coating film 7 to extend in the tufting direction of the pile yarns 3.

The coating-completed lining 5 is immediately transferred to the outer fabric compression portion 63, and the outer fabric 9 used for coating the bottom surface of the lining 5 is simultaneously supplied from the outer fabric supply portion 61 to the outer fabric compression portion 63. In this manner, the outer fabric 9 piled up on the bottom surface of the lining 5 transferred to the outer fabric compression portion 63 is compressed to adhere to the lining 5 by the thermo-compression roller 67 with the stitch 4 portions of the pile yarns 3 and the coating film 7 formed thereon interposed therebetween, thus completing a single artificial turf mat 1.

### [Industrial Applicability]

In the artificial turf mat and the manufacturing apparatus thereof according to exemplary embodiments of the present disclosure, since the stitch portions, of the pile yarns tufted to the lining, exposed to the bottom surface of the lining adhered to the outer fabric, as well as to the coating film, pull-out strength of the pile yarns may be increased to enhance durability of the artificial turf mat, and since a large amount of coating agent is not required to be used to increase pull-out strength of the pile yarns, manufacturing cost of the artificial turf mat may be reduced as much.

## Claims

1. An artificial turf mat comprising:
a plurality of pile yarns (3) corresponding to artificial turf;
a lining (5) in which the plurality of pile yarns (3) are turfed;
a coating film (7) formed by coating a coating agent on the bottom surface of the lining (5) to which the pile yarns (3) are exposed; and
an outer fabric (9) thermo-compressed to the bottom surface of the lining (5) on which the coating film (7) is formed,
wherein the coating film (7) is formed on each of the plurality of pile yarns (3) exposed to the bottom surface of the lining (5) in a tufting direction of the pile yarns.

2. The artificial turf mat of claim 1, further comprising a plurality of drain grooves (11) formed between a plurality of coating rows formed by the coating film (7) in the tufting direction of the plurality of pile yarns (3).

3. An apparatus for manufacturing an artificial turf mat, the apparatus comprising:
a pile yarn supply portion (53) supplying a plurality of pile yarns (3) corresponding to artificial turf;
a lining supply portion (55) supplying a lining (5) in which the plurality of pile yarns (3) are to be tufted;
a weaving portion (57) turfing the plurality of pile yarns (3) supplied from the pile yarn supply portion (53) to the lining (5) supplied from the lining supply portion (55); and
a coating portion (59) coating a coating agent on a bottom surface of the lining (5) to which the plurality of pile yarns (3) tufted by the weaving portion (57) are exposed, and
the apparatus further comprising:
an outer fabric supply portion (61) supplying an outer fabric (9) to be adhered to the bottom surface of the lining (5); and
an outer fabric compression portion (63) thermo-compressing the outer fabric (9) supplied from the outer fabric supply portion (61) to the bottom surface of the lining (5) on which the coating agent has been coated by the coating portion (59).

4. The apparatus of claim 3, wherein the coating portion (59) applies the coating agent to each of the plurality of pile yarns (3) exposed to the bottom surface of the lining (5) in a spray manner in a tufting direction of the plurality of pile yarns (3).
